# EUROPEAN PATENT APPLICATION

(11) **EP 4 679 585 A1**
(43) Date of publication of application: **14.01.2026**
(21) Application number: 24832328.9
(22) Date of filing: 12.06.2024
(51) Int. Cl.: H01M 50/159, H01M 50/105, H01M 50/184, H01M 50/528

(54) **SECONDARY BATTERY AND SECONDARY BATTERY MODULE**

(30) Priority: 28.06.2023 KR 20230083517
(71) Applicant: LG Energy Solution Ltd., Seoul 07335 (KR)
(72) Inventor: KWON, Myung Bin, Daejeon 34122 (KR)
(74) Representative: Plasseraud IP
(86) International application number: PCT/KR2024/008068
(87) International publication number: WO 2025/005548

(57) **Abstract**

The secondary battery according to the present disclosure includes an electrode assembly in which a positive electrode with a protruding positive electrode tab, a separator, and a negative electrode with a protruding negative electrode tab are alternately stacked; and a pouch accommodating the electrode assembly, wherein the pouch is formed by stacking an inner resin layer, a metal layer, and an outer resin layer from the inner side where the electrode assembly is accommodated to the outer side, the pouch has a portion of the inner resin layer opened so that a first exposed portion of the metal layer is exposed to the inner side of the pouch and a portion of the outer resin layer opened so that a second exposed portion of the metal layer is exposed to the outer side of the pouch, and any one of the positive electrode tab and the negative electrode tab is in contact with the first exposed portion.

## Description

### TECHNICAL FIELD

The present application claims priority to Korean Patent Application No. 10-2023-0083517 filed on June 28, 2023 in the Republic of Korea, the disclosure of which is incorporated herein by reference.

The present disclosure relates to a secondary battery and a secondary battery module provided by stacking a plurality of the secondary batteries, and more specifically, to a secondary battery and a secondary battery module capable of increasing energy density compared to the same area by removing one of two electrode leads (a positive electrode lead and a negative electrode lead).

### BACKGROUND ART

Demand for secondary batteries as an energy source is rapidly increasing in various fields, including personal mobile devices and electric vehicles.

Secondary batteries may be classified in various ways depending on the materials and external shapes of a positive electrode and a negative electrode, but among these, a lithium secondary battery using lithium compound materials is widely used in place of a conventional nickel-cadmium secondary battery due to its large capacity and low self-discharge rate.

And, the lithium secondary battery may be manufactured in various forms, and is typically manufactured in cylinder type, prismatic type, or pouch type.

Among them, the pouch-type secondary battery has a structure in which an electrode assembly is embedded in a pouch, and each of the electrode tabs (a negative electrode tab and a positive electrode tab) of the electrode assembly is collected with one another having the same polarity and then welded to each of the electrode leads (a negative electrode lead and a positive electrode lead). And, one end of the electrode leads has a structure protruding outward from the pouch to enable electrical connection with an external device.

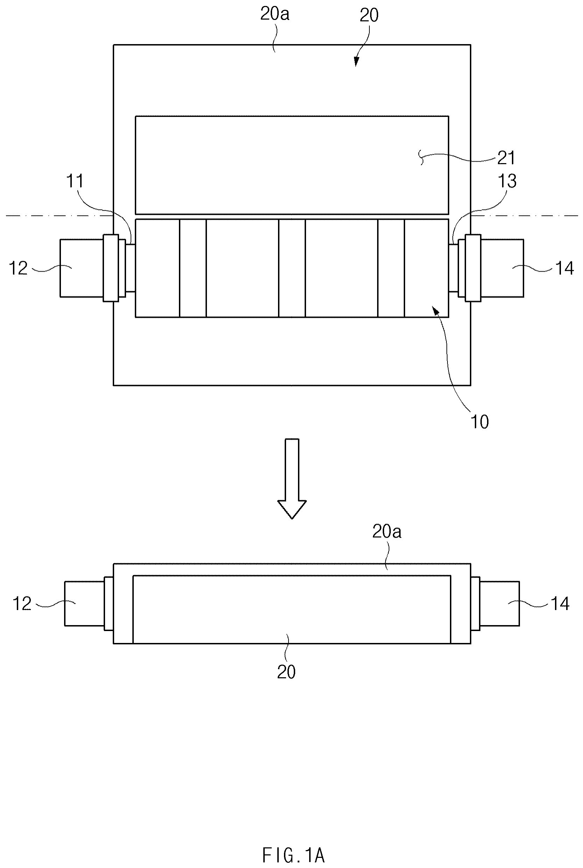

And, the pouch has a structure in which an inner resin layer, a metal layer, and an outer resin layer are stacked from the inner side where the electrode assembly is accommodated to the outer side. And, referring to FIG. 1a, which shows a state before the electrode assembly is mounted on the pouch and a state where the terrace portion is sealed after the electrode assembly is mounted in a conventional secondary battery, the pouch is formed with a cup portion 21 having a concave shape so that the electrode assembly may be inserted.

Also, the terrace portion 20a is formed to have a certain area so that sealing may be performed along the edge of the cup portion 21. When the pouch 20 is folded along the fold line (a dash-single dotted line in FIG. 1a) while the electrode assembly 10 is mounted on the cup portion 21, sealing is performed at a portion where the terrace portions come into contact with each other (the upper and lower regions of the pouch in FIG. 1a), and when sealing is performed, it is folded or cut to have a certain length. In this case, the electrode lead 12 connected to the positive electrode tab 11 and the electrode lead 14 connected to the negative electrode tab 13 protrude from each of both ends of the pouch 20, respectively.

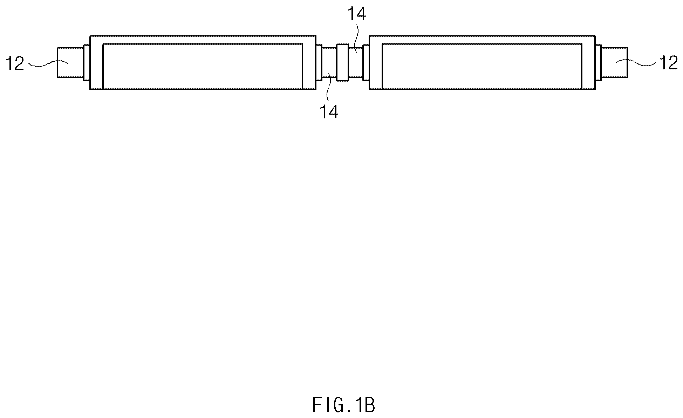

In conventional secondary batteries having such a structure, as shown in FIG. 1b, which shows the electrical connection between conventional secondary batteries, electrode leads 14, 14 having the same polarity are connected in parallel or electrode leads having different polarities are connected in series.

However, within a limited space, this structure has space limitations by the length of the electrode lead. Additionally, when manufactured as a secondary battery module, space limitations arise by the length of the electrode lead when secondary batteries are stacked.

### DISCLOSURE OF THE INVENTION

### TECHNICAL PROBLEM

Therefore, the present disclosure is directed to providing a secondary battery capable of increasing energy density compared to the same area (by removing one of the electrode leads) and a secondary battery module in which a plurality of the secondary batteries are connected.

### TECHNICAL SOLUTION

In order to achieve the above-described purpose, the secondary battery provided by the present disclosure includes an electrode assembly in which a positive electrode with a protruding positive electrode tab, a separator, and a negative electrode with a protruding negative electrode tab are alternately stacked; and a pouch accommodating the electrode assembly, wherein the pouch is formed by stacking an inner resin layer, a metal layer, and an outer resin layer from the inner side where the electrode assembly is accommodated to the outer side, the pouch has a portion of the inner resin layer opened so that a first exposed portion of the metal layer is exposed to the inner side of the pouch and a portion of the outer resin layer opened so that a second exposed portion of the metal layer is exposed to the outer side of the pouch, and any one of the positive electrode tab and the negative electrode tab is in contact with the first exposed portion.

And, the secondary battery further includes an electrode lead in which one end thereof is connected to any one of the positive electrode tab and the negative electrode tab and the other end thereof protrudes outward from the pouch, wherein the other one of the positive electrode tab and the negative electrode tab is in contact with the first exposed portion of the metal layer.

The pouch includes a cup portion in which the electrode assembly is accommodated; and a terrace portion formed along the periphery of the cup portion, wherein the first exposed portion of the metal layer is located on the terrace portion.

The terrace portion includes a first region between the first exposed portion and the cup portion; and a second region located outside the first exposed portion.

The first exposed portion is located at one side of the cup portion along the overall length direction.

The terrace portion of the pouch has regions disposed on both sides with the cup portion in between along the overall length direction, and the area of the region where the first exposed portion is located is formed to be wider than the area of the opposite region.

The second exposed portion is disposed on one surface of the cup portion. And, the second exposed portion is formed in plurality.

At least one of the second exposed portions may be formed on each of both surfaces of the cup portion.

A conductor is coupled to the second exposed portion, and the conductor has a thickness allowing it to protrude outward from a surface of the outer resin layer.

Also, the present disclosure further provides a secondary battery module in which a plurality of secondary batteries having the above technical characteristics are stacked.

The secondary battery module provided by the present disclosure is characterized in that a plurality of the secondary batteries are stacked, and neighboring secondary batteries are in contact with each other so that the second exposed portions are electrically connected to each other.

The secondary battery included in the secondary battery module provided by the present disclosure has a pouch having two planes parallel to each other, and neighboring secondary batteries are stacked so that the two planes of the pouch come into contact with each other, at least one of the second exposed portions is formed on each plane, and an insulating tape is attached to the externally exposed second exposed portion of the secondary battery located on the outermost side.

### ADVANTAGEOUS EFFECTS

Since the metal layer of the pouch having the above technical characteristics may replace the electrode lead of one of the negative electrode and the positive electrode, the area of the secondary battery may be reduced, and accordingly, the volume thereof may be reduced when stacked as a secondary battery module.

Also, as the electrode lead on one side is removed, the welding process for welding the electrode tabs and the electrode lead and the welding process for welding the electrode leads and the busbar after stacking the secondary batteries may be reduced, thereby further increasing production efficiency. And, since the size is reduced by the length of the removed electrode lead, the energy density may be further improved compared to the conventional structure in case of the same size.

The first exposed portion of the metal layer is located in the terrace portion where sealing is performed, so that the conventional electrode assembly may be used as it is even without deformation or movement of the electrode tab.

The first exposed portion is located on one side of the cup portion along the overall length direction of the terrace portion. Therefore, since the pouch is folded along the fold line parallel to the overall length direction, the first exposed portion may come into contact with both surfaces of the electrode tab to increase the contact surface. Additionally, the area of the terrace portion may be reduced compared to the case of being formed at other locations of the terrace portion.

The terrace portion of the pouch has regions disposed on both sides with the cup portion in between along the overall length direction, and the area of the region where the first exposed portion is located is formed to be wider than the area of the opposite region. Accordingly, a proper sealing area may be ensured even in the region where the first exposed portion is disposed.

The second exposed portion is formed in plurality, so that current may flow more smoothly. Additionally, a conductor may be coupled to the second exposed portion to ensure the stability of electrical connection between neighboring secondary batteries.

Additionally, an insulating tape may be attached to the second exposed portion that is not electrically connected, thereby further increasing safety.

### BRIEF DESCRIPTION OF THE DRAWINGS

FIG. 1a is a view showing a state before the electrode assembly is mounted on the pouch and a state where the terrace portion is sealed after the electrode assembly is mounted in a conventional secondary battery.
FIG. 1b is a view showing a state where conventional secondary batteries are electrically connected to each other.
FIG. 2 is a view showing a state before the electrode assembly is mounted on the pouch and a state where the terrace portion is sealed after the electrode assembly is mounted in a secondary battery provided by the present disclosure.
FIG. 3 is an enlarged view of part A in FIG. 2.
FIG. 4 is an enlarged view of part B in FIG. 2.
FIG. 5 is a view showing the inner and outer surfaces of the pouch provided by the present disclosure.
FIG. 6 is a view sequentially showing how a secondary battery is manufactured according to the present disclosure.
FIG. 7 is a view showing a state where secondary batteries are stacked alternately so that electrode leads face different directions.
FIG. 8 is a view showing a state where a conductor is inserted between neighboring secondary batteries in the stacked state of FIG. 7.
FIG. 9 is a view showing a state where secondary batteries are stacked so that electrode leads face the same direction.
FIG. 10 is a view showing a state where an insulating tape is attached to the second exposed portion of one of the secondary batteries located at the outermost side and a terminal of an external device is connected to the second exposed portion of the other battery in the stacked state of FIG. 9.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a secondary battery and a secondary battery module capable of increasing energy density compared to the same area by removing one of the two electrode leads, and hereinafter, preferred embodiments of the present disclosure will be described in more detail with reference to the accompanying drawings.

### Embodiment 1

The present disclosure provides, as an Embodiment 1, a pouch-type secondary battery capable of increasing energy density compared to the same area by removing one of the two electrode leads.

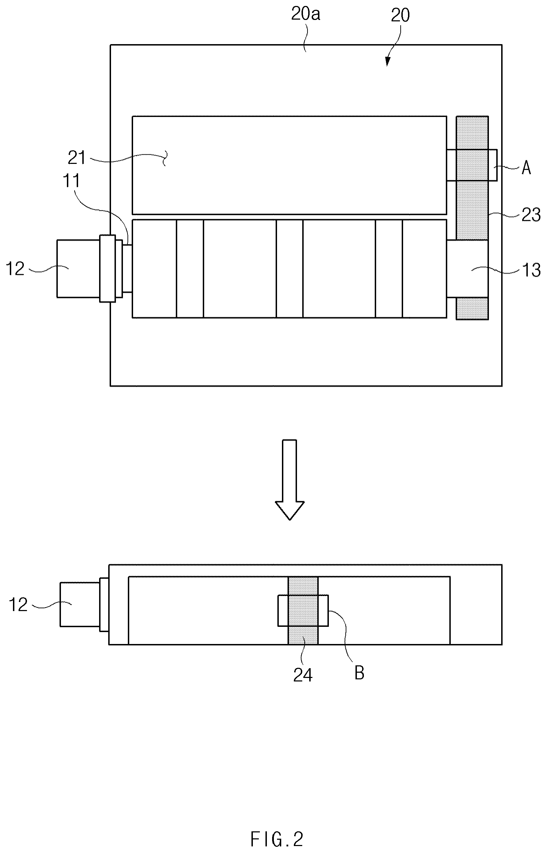

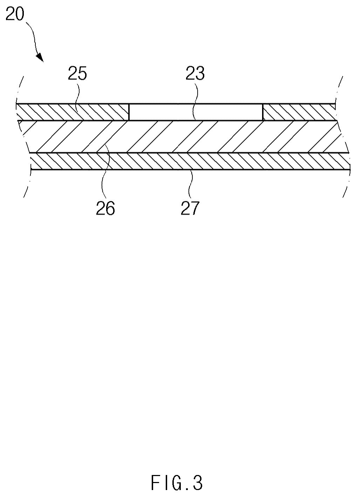

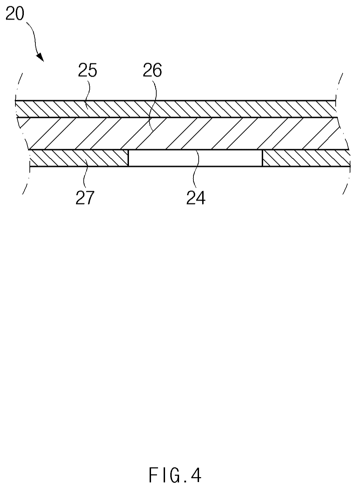

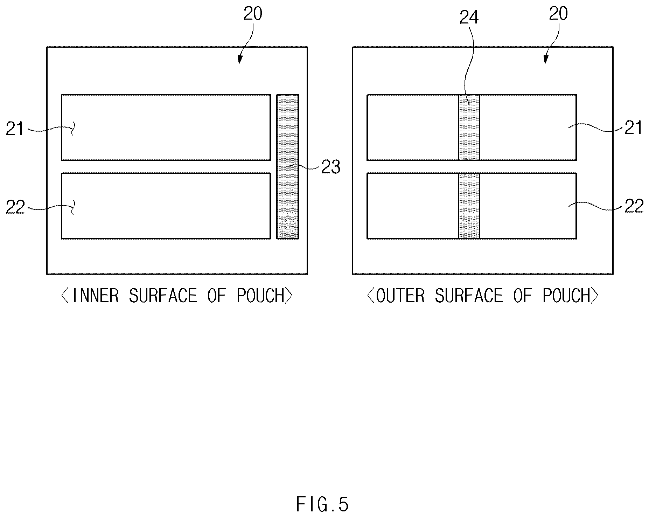

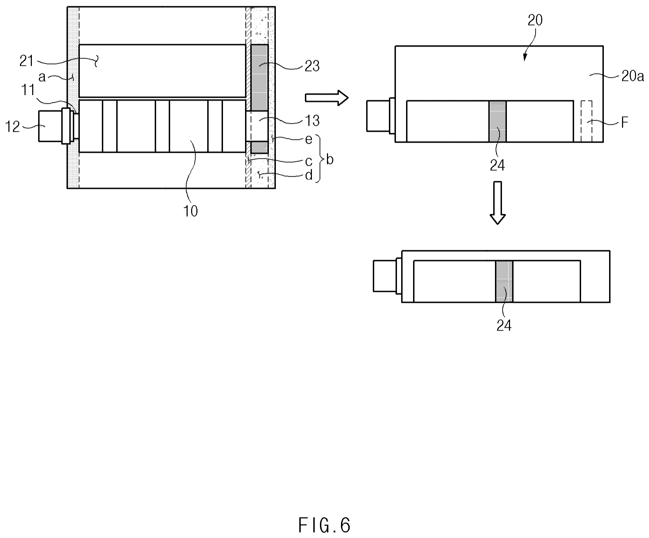

FIG. 2 is a view showing a state before the electrode assembly is mounted on the pouch and a state where the terrace portion is sealed after the electrode assembly is mounted in a secondary battery provided by the present disclosure. And, FIG. 3 is an enlarged view of part A in FIG. 2, and FIG. 4 is an enlarged view of part B in FIG. 2. FIG. 5 is a view showing the inner and outer surfaces of the pouch provided by the present disclosure, and FIG. 6 is a view sequentially showing how a secondary battery is manufactured according to the present disclosure.

Referring to the drawings, the electrode assembly 10 provided in this embodiment is manufactured by alternately stacking a positive electrode with a protruding positive electrode tab 11, a separator, and a negative electrode with a protruding negative electrode tab 13, as in the conventional structure.

In this case, the positive electrode tab 11 and the negative electrode tab 13 are disposed to face opposite directions to each other along the overall length direction. And, the positive electrode tab 11 is seated on the pouch 20 while being bonded to the electrode lead 12, which becomes the positive electrode lead, but the negative electrode tab 13 is seated on the pouch 20 without being bonded to the electrode lead.

That is, the electrode assembly 10 is seated on the cup portions 21, 22 of the pouch 20, and the electrode lead 12 connected to the positive electrode tab 11 and the negative electrode tab 13 are seated so as to be placed on the terrace portion 20a of the pouch 20. In this case, the end of the electrode lead 12 bonded to the positive electrode tab 11 protrudes from the terrace portion 20a of the pouch 20. The electrode lead may also be provided while being bonded to the negative electrode tab 13 instead of the positive electrode tab 11.

The pouch 20 accommodating the electrode assembly 10 is formed by stacking an inner resin layer 25, a metal layer 26, and an outer resin layer 27 from the inner side where the electrode assembly 10 is accommodated to the outer side.

And, as shown in FIG. 3, the pouch 20 has a portion of the inner resin layer 25 opened so that a first exposed portion 23 of the metal layer 26 is exposed to the inner side of the pouch 20, and as shown in FIG. 4, the pouch 20 has a portion of the outer resin layer 27 opened so that a second exposed portion 24 of the metal layer 26 is exposed to the outer side of the pouch 20.

When the electrode assembly 10 is seated, the negative electrode tab 13 is seated so as to contact the first exposed portion 23. In this case, conversely, if the electrode lead is bonded to the negative electrode tab 13, the electrode lead is removed from the positive electrode tab 11, and the positive electrode tab 11 is seated so as to be bonded to the first exposed portion 23. That is, the electrode assembly 10 provided in this embodiment includes an electrode lead in which one end thereof is connected to any one of the positive electrode tab 11 and the negative electrode tab 13 and the other end thereof protrudes outward from the pouch 20, wherein the other one of the positive electrode tab 11 and the negative electrode tab 13 is seated so as to contact the first exposed portion 23 of the metal layer 26.

The pouch 20 provided in this embodiment is configured to include cup portions 21, 22 having a concave shape so that the electrode assembly 10 may be accommodated and a terrace portion 20a extending over a certain area along the edges of the cup portions 21, 22. And, the first exposed portion 23 is located on the terrace portion 20a rather than on the cup portion, as shown in FIG. 5.

At this time, the first exposed portion 23 may also be formed within the cup portion so that the negative electrode tab 13 to which the electrode lead is not bonded is connected to the inside of the cup portion in a bent state without being placed on the terrace portion, but in this case, there may be possibilities of disconnection of the negative electrode tab 13 due to the bending of the negative electrode tab 13 and a short circuit caused by contact with the positive electrode, so in the embodiment provided by the present disclosure, the negative electrode tab 13 is located on the terrace portion 20a without bending.

Meanwhile, the first exposed portion 23 is located on one side of the cup portion 21 along the overall length direction. And, as shown in FIG. 6, the region where the first exposed portion 23 is located in the terrace portion 20a may be divided into a first region (c) between the first exposed portion 23 and the cup portion 21, a middle region (d) where the first exposed portion 23 is located, and a second region (e) located outside the first exposed portion 23.

In this case, it may vary depending on the area and shape of the first exposed portion 23, but the first region (c) and the second region (e) are preferably formed smaller than the middle region (d) in consideration of the sealing performance and the overall length of the secondary battery. And, the area of the first region (c) and the area of the second region (e) may be designed so that any one is formed wider than the other in consideration of the sealing performance.

Also, the terrace portion 20a of the pouch has regions (a, b) disposed on both sides with the cup portion 21 in between along the overall length direction, and the area of the region (b) where the first exposed portion 23 is located is formed to be wider than the area of the opposite region (a) in order to ensure proper sealing performance.

And, the second exposed portion 24 is spaced apart from the portion F opposite to the position where the first exposed portion 23 is formed, and is disposed on one surface of the cup portions 21, 22. More specifically, as shown in FIG. 4, it is formed on the outer surface of each of the two cup portions 21, 22. However, when stacked as a secondary battery module, the second exposed portion 24 may be formed in only one of the two cup portions 21, 22 if the secondary battery is disposed on the outermost side.

In this case, the second exposed portion 24 may be spaced apart from each other to be formed in plurality, and its area and shape may vary depending on the capacity of the secondary battery. Also, since the entire metal layer 26 is electrically conducted, the second exposed portion 24 may be selectively located anywhere in the terrace portion 20a except for the region where the electrode lead 12 protrudes, even if it is not the cup portions 21, 22.

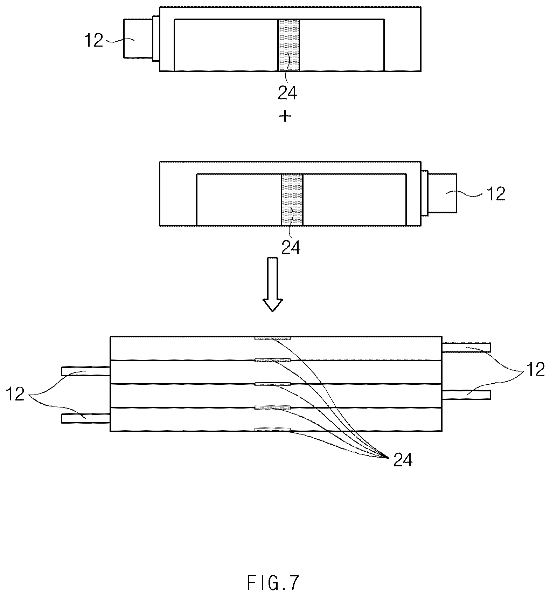

Additionally, when stacked as shown in FIG. 7, at least one may be formed on each of both surfaces of the cup portions 21, 22, which are the upper and lower surfaces, respectively, so that they may be electrically connected to the secondary batteries placed on the upper and lower layers.

Also, since the pouch 20 has a structure in which the inner resin layer 25, the metal layer 26, and the outer resin layer 27 are stacked, the thickness of the outer resin layer 27 is sufficiently thin (as shown in FIG. 4), but interference may occur in the contact of the metal layers 26 facing each other by the outer resin layer 27.

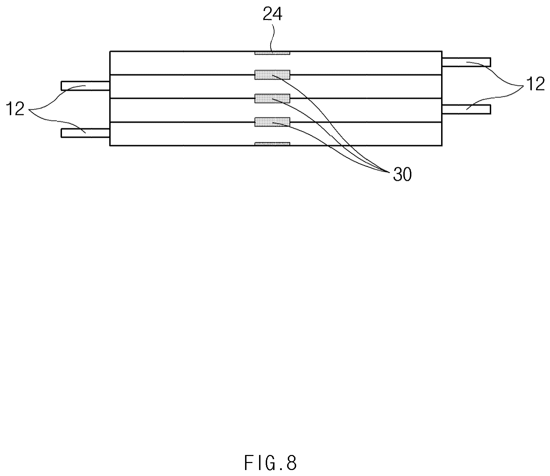

To prevent this, as shown in FIG. 8, a conductor 30 may be coupled to the second exposed portion 24. In this case, the conductor 30 has a thickness allowing it to protrude outward from the surface of the outer resin layer 27 when being coupled to the second exposed portion 24, but is limited to a thickness that does not create a gap when the secondary batteries are stacked together.

### Embodiment 2

The present disclosure provides, as an Embodiment 2, a secondary battery module in which a plurality of secondary batteries provided in the Embodiment 1 are stacked.

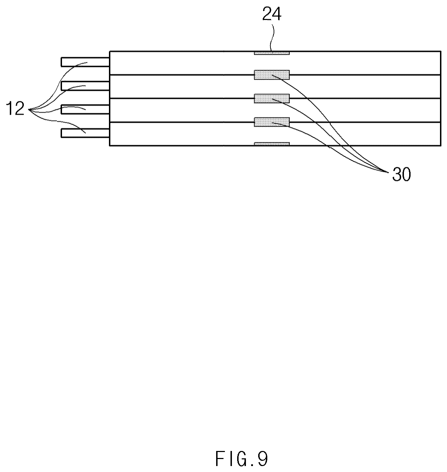

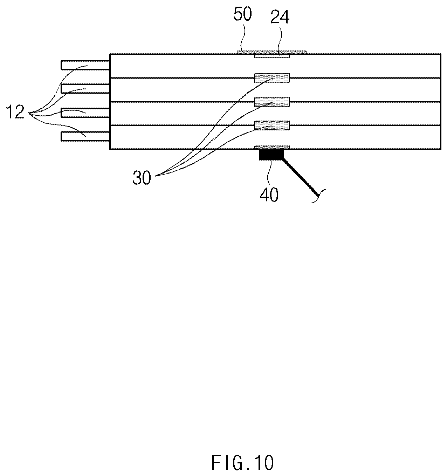

FIG. 7 is a view showing a state where secondary batteries are stacked alternately so that electrode leads face different directions, and FIG. 8 is a view showing a state where a conductor is inserted between neighboring secondary batteries in the stacked state of FIG. 7. And, FIG. 9 is a view showing a state where secondary batteries are stacked so that electrode leads face the same direction, and FIG. 10 is a view showing a state where an insulating tape 50 is attached to the second exposed portion 24 of one of the secondary batteries located at the outermost side and a terminal 40 of an external device is connected to the second exposed portion 24 of the other secondary battery in the stacked state of FIG. 9.

The secondary battery module provided in this embodiment is configured by stacking a plurality of secondary batteries, and as shown, neighboring secondary batteries are electrically connected to each other by contact between the second exposed portions 24.

That is, the secondary batteries are formed in two planes in which both outer surfaces of the cup portions 21, 22 are parallel to each other, and neighboring secondary batteries are stacked so that the outer surfaces of the cup portions 21, 22 which are planes come into contact with each other. And, at least one of the second exposed portions 24 is formed on each plane to contact the second exposed portions 24 of neighboring secondary batteries.

In this case, as described above, the conductor 30 may be coupled to the second exposed portion 24. And, the second exposed portion 24 of one of the secondary batteries located on the outermost side may be electrically connected to the terminal 40 of an external device, and an insulating tape 50 having electrical insulation may be attached the externally exposed second exposed portion 24 of the other secondary battery in order to prevent a short-circuit.

For reference, as shown in FIGS. 8 and 9, the electrode leads 12 may all protrude in the same direction and be connected, or may be configured to be divided in opposite directions and connected.

Since the metal layer 26 of the pouch 20 having the above technical characteristics may replace the electrode lead of one of the negative electrode and the positive electrode, the area of the secondary battery may be reduced, and thus the volume thereof may be reduced when stacked as a secondary battery module.

Also, as the electrode lead on one side is removed, the welding process for welding the electrode tabs and the electrode lead and the welding process for welding the electrode leads and the busbar after stacking the secondary batteries may be reduced, thereby further increasing production efficiency. And, since the size is reduced by the length of the removed electrode lead, the energy density may be further improved compared to the conventional structure in case of the same size.

The first exposed portion of the metal layer is located on the terrace portion where sealing is performed, so that the conventional electrode assembly may be used as it is even without deformation or movement of the electrode tab.

The first exposed portion is located on one side of the cup portion along the overall length direction of the terrace portion. Therefore, since the pouch is folded along the fold line parallel to the overall length direction, the first exposed portion may come into contact with both surfaces of the electrode tab to increase the contact surface. Additionally, the area of the terrace portion may be reduced compared to the case of being formed at other locations of the terrace portion.

The terrace portion of the pouch has regions disposed on both sides with the cup portion in between along the overall length direction, and the area of the region where the first exposed portion is located is formed to be wider than the area of the opposite region. Accordingly, a proper sealing area may be ensured even in the region where the first exposed portion is disposed.

The second exposed portion is formed in plurality, so that current may flow more smoothly. Additionally, a conductor may be coupled to the second exposed portion to ensure the stability of electrical connection between neighboring secondary batteries.

Additionally, an insulating tape may be attached to the second exposed portion that is not electrically connected, thereby further increasing safety.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Electrode assembly
20: Pouch
20a: Terrace portion
21, 22: Cup portion
23: First exposed portion
24: Second exposed portion

## Claims

1. A secondary battery comprising:
an electrode assembly in which a positive electrode with a protruding positive electrode tab, a separator, and a negative electrode with a protruding negative electrode tab are alternately stacked; and
a pouch accommodating the electrode assembly,
wherein the pouch is formed by stacking an inner resin layer, a metal layer, and an outer resin layer from the inner side where the electrode assembly is accommodated to the outer side,
the pouch has a portion of the inner resin layer opened so that a first exposed portion of the metal layer is exposed to the inner side of the pouch and a portion of the outer resin layer opened so that a second exposed portion of the metal layer is exposed to the outer side of the pouch, and
any one of the positive electrode tab and the negative electrode tab is in contact with the first exposed portion.

2. The secondary battery according to claim 1, further comprising:
an electrode lead in which one end thereof is connected to any one of the positive electrode tab and the negative electrode tab and the other end thereof protrudes outward from the pouch,
wherein the other one of the positive electrode tab and the negative electrode tab is in contact with the first exposed portion of the metal layer.

3. The secondary battery according to claim 2,
wherein the pouch comprises:
a cup portion in which the electrode assembly is accommodated; and
a terrace portion formed along the periphery of the cup portion,
wherein the first exposed portion of the metal layer is located on the terrace portion.

4. The secondary battery according to claim 3,
wherein the terrace portion comprises:
a first region between the first exposed portion and the cup portion; and
a second region located outside the first exposed portion.

5. The secondary battery according to claim 4,
wherein the first exposed portion is located at one side of the cup portion along the overall length direction.

6. The secondary battery according to claim 4,
wherein the terrace portion of the pouch has regions disposed on both sides with the cup portion in between along the overall length direction, and the area of the region where the first exposed portion is located is formed to be wider than the area of the opposite region.

7. The secondary battery according to claim 3,
wherein the second exposed portion is disposed on one surface of the cup portion.

8. The secondary battery according to claim 1,
wherein the second exposed portion is formed in plurality.

9. The secondary battery according to claim 8,
wherein at least one of the second exposed portions is formed on each of both surfaces of the cup portion.

10. The secondary battery according to claim 1,
wherein a conductor is coupled to the second exposed portion, and the conductor has a thickness allowing it to protrude outward from the surface of the outer resin layer.

11. A secondary battery module, comprising the secondary battery stated in claim 1,
wherein a plurality of the secondary batteries are stacked, and neighboring secondary batteries are in contact with each other so that the second exposed portions are electrically connected to each other.

12. The secondary battery module according to claim 11,
wherein the secondary battery has a pouch having two planes parallel to each other, and neighboring secondary batteries are stacked so that the planes of the pouch come into contact with each other,
at least one of the second exposed portions is formed on each plane, and
an insulating tape is attached to the externally exposed second exposed portion of the secondary battery located on the outermost side.
